# EUROPEAN PATENT SPECIFICATION

(11) **EP 2 996 176 B1**
(45) Date of publication and mention of the grant of the patent: **26.04.2017**
(21) Application number: 15184212.7
(22) Date of filing: 08.09.2015
(51) Int. Cl.: H01M 2/16, H01M 4/13, H01M 4/62, H01M 10/052

(54) **ELECTRODE BODY FOR LITHIUM BATTERY, AND LITHIUM BATTERY**
ELEKTRODENKÖRPER FÜR LITHIUMBATTERIE UND LITHIUMBATTERIE
CORPS D'ÉLECTRODE POUR BATTERIE AU LITHIUM ET UNE TELLE BATTERIE

(30) Priority: 10.09.2014 JP 2014184044
(43) Date of publication of application: 16.03.2016
(73) Proprietor: Seiko Epson Corporation, Tokyo 163-0811 (JP)
(72) Inventor: Ichikawa, Sukenori, Nagano, 392-8502 (JP); Hokari, Hirofumi, Nagano, 392-8502 (JP)
(74) Representative: Hoffmann Eitle

(56) References cited:
- US-A1- 2009 155 676
- US-A1- 2011 014 524
- US-A1- 2011 045 355

## Description

### BACKGROUND

### 1. Technical Field

Several aspects of the present invention relate to an electrode body for a lithium battery, a lithium battery, and the like.

### 2. Related Art

A lithium battery, in which lithium or a lithium-containing material is used in a negative electrode, is light in weight and has a large capacity, and is capable of obtaining a high voltage in a combination of an appropriate positive electrode. According to this, the lithium battery is widely used in a battery for a portable electronic apparatus, a camera, a timepiece, an electric tool, and a hybrid vehicle and the like.

However, in the lithium battery, lithium has high activity, and a combustible organic electrolytic solution is used, and thus it is necessary to pay attention to securing of safety.

Particularly, among active materials, metal lithium exhibits a high capacity density (approximately 3860 mAh/cc), but lithium grows in a dendrite shape on a negative electrode during charging and discharging, and the dendrite shape may cause a short-circuit with a positive electrode. Accordingly, it is necessary to be careful from the viewpoint of securing of safety.

As an attempt to increase the safety by preventing short-circuiting between the negative electrode and the positive electrode and firing, a lithium battery, which employs a ceramic electrolyte (inorganic solid electrolyte) has been developed (for example, refer to JP-A-2006-277997).

In the lithium battery, the ceramic electrolyte is used, and thus it is not necessary to use the combustible organic solution. In addition, the ceramic electrolyte is incombustible, and thus the lithium battery is excellent when considering safety.

However, in the lithium battery, as described in Examples of JP-A-2006-277997, a method of compaction-molding an electrolyte powder in combination with the electrode active material is employed with regard to the ceramic electrolyte. According to this, contact becomes insufficient at an interface between the ceramic electrolyte powder and the electrode active material, or at an interface between the ceramic electrolyte powders, and thus it is difficult to obtain a satisfactory battery output. In addition, the interface contact becomes unstable due to a volume variation in accordance with a charging and discharging cycle, and thus a cycle life deteriorates.

On the other hand, there is also reported a lithium battery, in which a laminated body such as a positive electrode thin film/a ceramic electrolyte thin film/a negative electrode thin film is formed by using a vapor phase thin film deposition method such as sputtering (for example, refer to JP-A-2004-179158). In this lithium battery, contact at an interface between an electrode (a positive electrode thin film or a negative electrode thin film) and the ceramic electrolyte becomes satisfactory, and it is possible to make the thickness of an active material layer or an electrolyte layer small. Accordingly, it is expected to obtain a high output and satisfactory cycle life characteristics.

However, in the lithium battery disclosed in JP-A-2004-179158) , a total thickness of an active material per unit area is as small as approximately 1 µm to several µm, and thus it is difficult to manufacture a battery with a sufficient capacity.

That is, it is necessary for the total thickness of the active material to be greater than 100 µm so as to obtain a sufficient capacity as a battery. However, in the method of JP-A-2004-179158, it is difficult for the total thickness to be greater than 100 µm, and thus the method is not capable of manufacturing a battery with a sufficient capacity.

In a lithium battery described in JP-A-2002-110225, safety is high when considering that an incombustible ordinary temperature molten salt electrolyte is used. However, the ordinary temperature molten salt electrolyte is a liquid, and thus when using a metal lithium negative electrode, or in a case where overcharging, in which lithium precipitation occurs even in a typical negative electrode formed from graphite, carbon, and the like, is caused, short-circuiting due to dendrite growth is apt to occur.

In the lithium battery in which lithium or a lithium-containing material is used in a negative electrode, for example, the above-described problem exists.

### SUMMARY

An advantage of some aspects of the invention is to provide a lithium battery which is capable of securing safety by preventing short-circuiting between a positive electrode and a negative electrode even when repeating charging and discharging, is capable of obtaining a sufficiently large output, and is capable of realizing a large capacity, and an electrode body for a lithium battery which is suitable for manufacturing of the lithium battery.

The invention can be implemented as the following forms or application examples.

A first aspect of the invention is directed to an electrode body for a lithium battery. The electrode body for a lithium battery includes a collector electrode, a negative electrode active material layer that is provided on one surface of the collector electrode, a soggy sand electrolyte layer that is provided on a side of the negative electrode active material layer which is opposite to a collector electrode side, and an inorganic solid electrolyte layer that is provided on a side of the soggy sand electrolyte layer which is opposite to a negative electrode active material layer side. In the soggy sand electrolyte layer, a plurality of particles is impregnated with an ordinary temperature molten salt electrolyte.

According to this configuration, growth of a dendrite is blocked by the soggy sand electrolyte layer and the inorganic solid electrolyte layer, and thus short-circuiting is prevented from occurring between a negative electrode and a positive electrode. Accordingly, it is possible to prevent firing or an explosion due to short-circuiting. As a result, it is possible to secure safety. In addition, since the safety can be improved, it is possible to use metal lithium with a high capacity density in the negative electrode, and thus it is possible to realize a high output and a high capacity of a lithium battery. In addition, it is possible to realize a reduction in size and weight of the lithium battery. In addition, an incombustible inorganic solid electrolyte or an ordinary temperature molten salt is used, and thus a lithium battery with high safety is obtained.

In the first aspect, it is preferable that two or more laminated structures are provided, each of the laminated structures including the soggy sand electrolyte layer and the inorganic solid electrolyte layer.

According to this configuration, the growth of dendrite is more securely blocked, and thus it is possible to increase the effect of preventing the short-circuiting between the positive electrode and the negative electrode.

In the first aspect, it is preferable that the inorganic solid electrolyte layer is formed by a vapor phase method.

When the vapor phase method is employed, it is possible to form a dense inorganic solid electrolyte layer with excellent coatability.

A second aspect of the invention is directed to an electrode body for a lithium battery. The electrode body for a lithium battery includes a collector electrode, an electrode mixture layer that is provided on one surface of the collector electrode, and an inorganic solid electrolyte layer that is provided on a side of the electrode mixture layer which is opposite to a collector electrode side. The electrode mixture layer is constituted by a mixture of an electrode active material, and at least a soggy sand electrolyte, and in the soggy sand electrolyte, a plurality of particles is impregnated with an ordinary temperature molten salt electrolyte.

According to this configuration, the growth of dendrite is blocked by the inorganic solid electrolyte layer, and thus short-circuiting is prevented from occurring between the negative electrode and the positive electrode. Accordingly, it is possible to prevent firing or an explosion due to short-circuiting. As a result, it is possible to secure safety. In addition, since the safety can be improved, it is possible to use metal lithium with a high capacity density in the negative electrode, and thus it is possible to realize the high output and the high capacity of the lithium battery. In addition, it is possible to realize a reduction in size and weight of the lithium battery. In addition, the incombustible inorganic solid electrolyte or the ordinary temperature molten salt is used, and thus a lithium battery with high safety can be obtained.

In the second aspect, it is preferable that the soggy sand electrolyte layer is provided on a side of the inorganic solid electrolyte layer which is opposite to an electrode mixture layer side, and in the soggy sand electrolyte layer, the plurality of particles is impregnated with the ordinary temperature molten salt electrolyte.

According to this configuration, the growth of a dendrite is securely blocked, and thus it is possible to increase the effect of preventing the short-circuiting between the positive electrode and the negative electrode.

In the second aspect, it is preferable that the electrode body for a lithium battery includes two or more laminated structures, each of the laminated structures including the inorganic solid electrolyte layer and the soggy sand electrolyte layer.

According to this configuration, the growth of a dendrite is securely blocked, and thus it is possible to increase the effect of preventing the short-circuiting between the positive electrode and the negative electrode.

In the second aspect, it is preferable that the inorganic solid electrolyte layer is formed by a vapor phase method.

When the vapor phase method is employed, it is possible to form a dense inorganic solid electrolyte layer with excellent coatability.

It is preferable that a lithium battery according to an aspect of the invention uses the electrode body for a lithium battery according to the first aspect as a negative electrode.

It is preferable that a lithium battery according to an aspect of the invention uses the electrode body for a lithium battery according to the second aspect as a negative electrode.

It is preferable that a lithium battery according to an aspect of the invention uses the electrode body for a lithium battery according to the second aspect as a positive electrode.

It is preferable that a lithium battery according to an aspect of the invention uses the electrode body for a lithium battery according to the second aspect as a positive electrode, and uses the electrode body for a lithium battery according to the first aspect or the electrode body for a lithium battery according to the second aspect as a negative electrode.

### BRIEF DESCRIPTION OF THE DRAWINGS

The invention will be described with reference to the accompanying drawings, wherein like numbers reference like elements.
Fig. 1 is a schematic view illustrating a first embodiment of a lithium battery according to the invention.
Fig. 2 is a schematic view illustrating a state in which a dendrite is formed in an electrode body of the lithium battery illustrated in Fig. 1.
Fig. 3 is a schematic view illustrating the dendrite formed in the electrode body having grown further in the lithium battery illustrated in Fig. 1.
Fig. 4 is a schematic view illustrating a second embodiment of the lithium battery according to the invention.
Fig. 5 is a schematic view illustrating a third embodiment of the lithium battery according to the invention.
Fig. 6 is a schematic view illustrating a lithium battery in which an inorganic solid electrolyte layer is formed to come into contact with a negative electrode active material layer.
Fig. 7 is a schematic view illustrating a state in which a dendrite is formed in an electrode body of the lithium battery illustrated in Fig. 6.
Fig. 8 is a schematic view illustrating a fourth embodiment of the electrode body according to the invention.
Fig. 9 is a schematic view illustrating a fifth embodiment of the electrode body according to the invention.
Fig. 10 is a schematic view illustrating a fourth embodiment of the lithium battery according to the invention.
Fig. 11 is a schematic view illustrating a fifth embodiment of the lithium battery according to the invention.
Fig. 12 is a schematic view illustrating a sixth embodiment of the lithium battery according to the invention.

### DESCRIPTION OF EXEMPLARY EMBODIMENTS

Hereinafter, the invention will be described in detail with reference to the accompanying drawings. However, the drawings are used for convenience of explanation, and size ratios and the like of constituent elements illustrated in the drawings may be different from actual size ratios and the like.

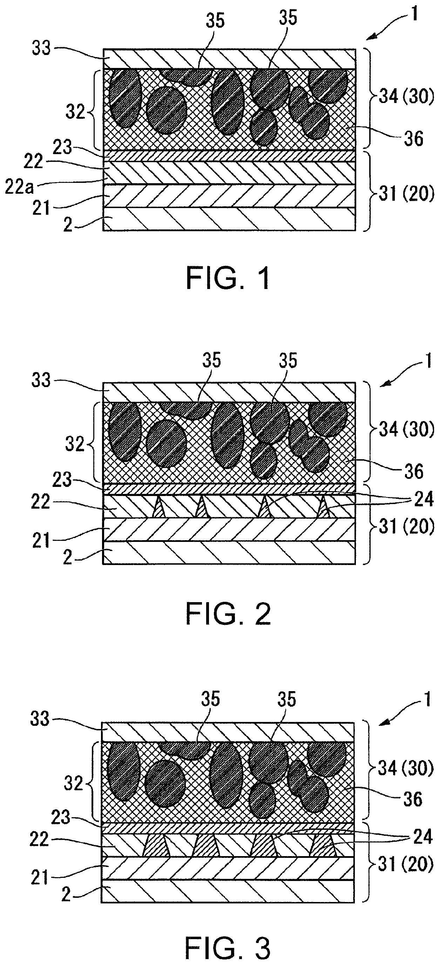

Fig. 1 is a schematic view illustrating a lithium battery 1 that is a first embodiment of a lithium battery according to the invention.

In the lithium battery 1, an electrode body for a lithium battery (hereinafter, referred to as an electrode body) 20 is used as a negative electrode, and an electrode body 30 is used as a positive electrode. Specifically, the lithium battery 1 includes a negative electrode body 31 that is the electrode body 20, and a positive electrode body 34 that is the electrode body 30.

First, description will be given of the electrode body 20. The electrode body 20 is a first embodiment of the electrode body for a lithium battery according to the invention. The electrode body 20 includes a collector electrode 2, a negative electrode active material layer 21 that is provided to come into contact with one surface of the collector electrode 2, a soggy sand electrolyte layer 22 that is provided on the negative electrode active material layer 21, and an inorganic solid electrolyte layer 23 that is provided on the soggy sand electrolyte layer 22.

It is preferable that the collector electrode 2 is formed from a material that does not react with an active material of the negative electrode active material layer 21. Examples of the material that forms the collector electrode 2 include one metal selected from the group consisting of copper (Cu), magnesium (Mg), titanium (Ti), iron (Fe), cobalt (Co), nickel (Ni), zinc (Zn), aluminum (Al), germanium (Ge), indium (In), gold (Au), platinum (Pt), silver (Ag), and palladium (Pd), an alloy containing two or more metal elements selected from the group, and the like. In addition, stainless steel can be used, or a conductive resin material (conductive rubber and the like) may also be used.

As a material that forms the collector electrode 2 for the negative electrode body 31, copper is preferable.

The collector electrode 2 may be constituted by a thin sheet material or a foil material, or may be formed by a vapor phase method (a sputtering method, a deposition method, a CVD method).

The thickness of the collector electrode 2 is preferably 0.1 µm to 2000 µm, and may be set to, for example, 10 µm to 200 µm. A negative electrode interconnection layer (not illustrated) may be connected to the collector electrode 2.

It is preferable that the negative electrode active material layer 21 contains a Li metal or a Li alloy at least in a charged state.

As the Li alloy, a Li-based alloy (Li-Ag, Li-Al, Li-In, Li-Bi, Li-Sb, Li-Si, Li-Sn, and the like) can be used. In addition, an alloy of Li and a Si-based alloy (Si-Mn, Si-Co, Si-Ni, and the like) may be used.

The following materials may be used for the negative electrode active material layer 21.
(1) A carbon material such as graphite, hard carbon, amorphous carbon, graphene, fullerene, and carbon nanotube
(2) A lithium double oxide such as Li₄Ti₅O₁₂, Li₂Ti₃O₇, and Li₂TiO₃
(3) An oxide such as niobium pentoxide (Nb₂O₅), vanadium pentoxide (V₂O₅), titanium oxide (TiO₂) (including an anatase type, a rutile type, and a brookite type), tricobalt tetroxide (C0₃O₄), indium oxide (In₂O₃), zinc oxide (ZnO), tin oxide (SnO₂), nickel oxide (NiO), silicon oxide (SiO), silicon dioxide (SiO₂), tin (Sn)-added indium oxide (ITO), aluminum (Al)-added zinc oxide (AZO), gallium (Ga)-added zinc oxide (GZO), antimony (Sb)-added tin oxide (ATO), and fluorine (F)-added tin oxide (FTO)

The thickness of the negative electrode active material layer 21 is preferably 0 µm to 200 µm, and more preferably 0 µm to 100 µm.

The negative electrode active material layer 21 may be constituted by a thin sheet material or a foil material, and may be formed by a vapor phase method (a sputtering method, a deposition method, and a CVD method).

Li precipitates onto the collector electrode 2 due to charging, and thus a Li layer is formed thereon. Accordingly, this Li layer can be used as the negative electrode active material layer 21. As a result, even in a case where the negative electrode active material layer 21 is not formed in a stage before use, there is no problem in the function of a lithium battery.

The soggy sand electrolyte layer 22 is formed on a surface (that is, an upper surface of the negative electrode active material layer 21 in Fig. 1) of the negative electrode active material layer 21 on a side opposite to a collector electrode 2 side. The soggy sand electrolyte layer 22 is formed by impregnating soggy sand particles 22a formed from an insulating material with an ordinary temperature molten salt electrolyte. For example, the soggy sand particles 22a are formed from an oxide, a sulfide, a polyacid salt, glass, a crystalline material, and the like. Specific examples thereof include colloidal silica, colloidal alumina, colloidal zirconia, colloidal titania, fumed silica, fumed alumina, fumed zirconia, fumed titania, and the like.

An average particle size of the soggy sand particles 22a may be set to 5 nm to 50 µm (preferably, 5 nm to 1 µm). For example, the average particle size may be set to an average value of the maximum diameters (maximum lengths) of the soggy sand particles 22a exposed on a cross-section that is formed when cutting the soggy sand layer 22 at an arbitrary plane.

The soggy sand electrolyte layer 22 may contain a binding agent such as polytetrafluoroethylene and polyvinyl alcohol to give plasticity or strength. An amount of the binding agent that is added is preferably 1% by mass to 30% by mass.

The soggy sand represents a state in which the surface of particles is softly wet. The soggy sand particles 22a are in a state in which the surface thereof is wet due to a liquid (ordinary temperature molten salt) that is contained in the layer. An amount of the soggy sand particles 22a which are added may be set to, for example, 10% by volume to 90% by volume (preferably, 50% by volume to 80% by volume) with respect to a liquid. In addition, the capacity of the soggy sand particles 22a is a volume capacity.

The ordinary temperature molten salt electrolyte is an electrolyte composition that contains an ordinary temperature molten salt. The ordinary temperature molten salt is a salt that is in a liquid phase at an ordinary temperature, and is also called an ionic liquid or an ion liquid. It is preferable that the ordinary temperature molten salt is a liquid in a temperature range of 0°C to 200°C. The ordinary temperature molten salt has high heat resistance, is non-volatile, and has a low partial pressure even in a high vacuum. Accordingly, the ordinary temperature molten salt is applicable to a vapor phase process such as a sputtering method, a deposition method, and a CVD method.

The ordinary temperature molten salt is configured in a combination of a cation and an anion. Hereinafter, the cation and the anion will be exemplified.

Cation: 1-ethyl-3-methylimidazolium (EMI), N,N-diethyl-N-methyl-N-(2-methoxyethyl) ammonium (DEME), N-methyl-N-propyl pyrrolidinium) (P13), (N-methyl-N-propylpiperidinium) (PP13), N-ethyl-N-butyl pyrrolidinium (P24), and the like can be used. As the cation, one or more of these can be used.

Anion: bis(fluorosulfonyl) imide (FSI), fluorosulfonyl (trifluoromethylsulfonyl) imide(FTI), bis(trifluoromethylsulfonyl) imide (TFSI), bis(pentafluoroethylsufonyl) imide (BETI), tetrafluoroborate (BF₄), trifluoromethyltrifluoroborate (CF₃BF₃), pentafluoroethyltrifluoroborate (CF₃CF₂BF₃), hexafluorophospate (PF₆), and the like may be used. As the anion, one or more of these can be used.

As the ordinary temperature molten salt electrolyte, an electrolyte obtained by dissolving a lithium salt in an ordinary temperature molten salt can be used.

It is preferable that the lithium salt is dissolved, for example, in the ordinary temperature molten salt to generate a lithium ion, or the lithium salt is dissolved in glyme to form a lithium salt complex. Examples of the lithium salt include LiBF₄, LiPF₆, LiBF₄, LiClO₄, LiCF₃SO₃, LiN(CF₃SO₂)₂, LiN(C₂F₅SO₂)₂, LiN(CF₃SO₂) (C₄F₉SO₂), LiC(CF₃SO₂)₃, LiC(C₂F₅SO₂)₃, and the like. As the lithium salt, one or more of these can be used. For example, a concentration of the lithium salt may be set to approximately 1 M.

The glyme is a general term of symmetric glycol diether, and is expressed by R-O(CH₂CH₂O)ₙ-R. R represents an aklyl group, a phenyl group, a cyclohexyl group, and the like, and n is an integer of 1 or greater (for example, 1 to 5). As the glyme, for example, methyl monoglyme, methyl diglyme, methyl triglyme, methyl tetraglyme, ethyl monoglyme, ethyl diglyme, butyl diglyme, and the like can be used.

The ordinary temperature molten salt electrolyte may contain an organic solvent or an organic electrolytic solution. Examples of the organic solvent include propylene carbonate (PC), ethylene carbonate (EC), vinylene carbonate (VC), vinyl ethylene carbonate (VEC), dimethyl carbonate (DMC), diethyl carbonate (DEC), ethyl methyl carbonate (EMC), and the like. As the organic solvent, one of these may be used or two or more of these may be mixed and used.

As the organic electrolytic solution, a solution obtained by dissolving a lithium salt in the organic solvent can be used. As the lithium salt, the above-described lithium salts can be used.

When the organic solvent (or the organic electrolytic solution) is used, it is possible to raise ion conductivity, and thus it is possible to make an output of a lithium battery greater. It is preferable that a concentration (content rate) of the organic solvent or the organic electrolytic solution in the ordinary temperature molten salt electrolyte is 50% by volume or less. As described above, when the concentration of the organic solvent or the organic electrolytic solution is limited, it is possible to reduce a possibility of firing of the soggy sand electrolyte impregnated with the ordinary temperature molten salt electrolyte, and thus safety is improved.

The thickness of the soggy sand electrolyte layer 22 is preferably 10 µm to 1000 µm, and more preferably 50 µm to 500 µm.

The soggy sand electrolyte layer 22 becomes a soggy sand shape, and thus growth of dendrite, which grows during charging and discharging, is suppressed. The reason why the growth of dendrite is suppressed can be assumed as follows.

In the soggy sand electrolyte layer 22, the soggy sand particles 22a are impregnated with a liquid (the ordinary temperature molten salt, the organic electrolytic solution, and the like), and thus the liquid exists in a space of a narrow and complicated inter-particle gap. Growth of dendrite is limited to the narrow and complicated space, and thus free growth is blocked. According to this, growth of dendrite is suppressed.

In addition, when the ordinary temperature molten salt becomes the soggy sand shape, heat resistance and anti-firing properties can be further raised. In addition, it is also possible to obtain an effect of improving ion conductivity. In addition, the soggy sand electrolyte layer 22 can apply the same characteristics as those of a solid to the ordinary temperature molten salt electrolyte. That is, it is possible to allow the ordinary temperature molten salt electrolyte to be "pseudo-solidified". According to this, it is possible to prevent liquid leakage.

In addition, it is possible to form a dense film (inorganic solid electrolyte layer 23) on the soggy sand electrolyte layer 22 with excellent coatability by the vapor phase method due to the "pseudo-solidification" of the soggy sand electrolyte layer 22 in addition to non-volatility of the ordinary temperature molten salt.

The inorganic solid electrolyte layer 23 is formed on a surface (that is, an upper surface of the soggy sand electrolyte layer 22 in Fig. 1) of the soggy sand electrolyte layer 22 on a side opposite to a negative electrode active material layer 21 side.

As the inorganic solid electrolyte that is used in the inorganic solid electrolyte layer 23, an inorganic solid electrolyte, to which electron conductivity is not applied due to modification caused by reduction when coming into contact with metal lithium, is used. For example, the following materials can be used.
(1) Li₃PO₄ (crystal), Li₃BO₃ (crystal), a solid-solution of the crystals and Li₂CO₃ (crystal), glass (LIPON, LIBON, and the like) obtained by adding nitrogen to the crystals
(2) Oxide-based glass or crystal such as SiO₂-P₂O₅-Li₂O, SiO₂-P₂O₅-LiCl, Li₂O-LiCl-B₂O₃, Li₂O-SiO₂-B₂O₃, Li₂O-SiO₂-ZrO₂, Li₃PO₄-Li₄SiO₄, Li₄SiO₄-Li₃VO₄
(3) A perovskite type oxide crystal such as Li_{0.18}La_{0.27}TaO₃
(4) A Garnet-type oxide such as Li₇La₃Zr₂O₁₂
(5) An oxide crystal such as Li₃.₄V_{0.6}Si_{0.4}O₄, Li₁₄ZnGe₄O₁₆, Li_{3.6}V_{0.4}Ge_{0.6}O₄, and LiNbO₃
(6) A sulfide crystal such as Li₄₋ₓSi₁₋ₓPₓS₄, and Li₄₋ₓGe₁₋ₓPₓS₄
(7) Sulfide-based glass such as Li₂S-SiS₂, Li₂S-SiS₂-LiI, and Li₂S-SiS₂-P₂S₅
(8) A Li₃N crystal and glass or glass ceramic such as Li₃N-LiCl and Li₃N-LiI-LiOH which contain the Li₃N crystal
(9) Glass or glass ceramic such as LiI, LiI-CaI₂, and LiI-CaO

A solid-solution, in which a part of atoms of the compositions is substituted with other transition metals, typical metals, alkali metals, alkali rare-earth elements, Lanthanides, chalcogenides, halogens, and the like, can also be used as the solid electrolyte.

A lithium ion can be transmitted through the inorganic solid electrolyte layer 23. The thickness of the inorganic solid electrolyte layer 23 is preferably 0.1 µm to 10 µm, and more preferably 1 µm to 5 µm.

The inorganic solid electrolyte layer 23 may be formed by application or press molding, or may be formed by a vapor phase method (a sputtering method, a vacuum deposition method, a CVD method, and the like). When the vapor phase method is used, it is possible to form the inorganic solid electrolyte layer 23, which is dense, with excellent coatability.

The electrode body 30 includes a positive electrode mixture layer 32, and a collector electrode 33 that is provided on the positive electrode mixture layer 32.

The positive electrode mixture layer 32 includes a plurality of particles 35, which is formed from an electrode active material, in the electrolyte 36. The positive electrode mixture layer 32 is provided on an inorganic solid electrolyte layer 23 side of the negative electrode body 31.

As the electrode active material, which becomes the particles 35, for example, the following materials can be used.
(1) A lithium double oxide such as LiCoO₂, LiNiO₂, LiMn₂O₄, Li₂Mn₂O₃, LiFePO₄, Li₂FeP₂O₇, LiMnPO₄, LiCoPO₄, LiFeBO₃, Li₃V₂(PO₄)₃, Li₂CuO₂, LiFeF₃, Li₂FeSiO₄, and Li₂MnSiO₄
(2) A solid-solution in which a part of atoms of the lithium double oxide is substituted with other transition metals, typical metals, alkali metals, alkali rare-earth elements, Lanthanides, chalcogenides, halogens, and the like
(3) A sulfide such as Li₂S-FeS₂ and TiS₂
(4) A stable radical polymer such as poly (4-methacryloyloxy-2,2,6,6-tetramethylpiperidine-1-oxyl) (PTMA), poly(4-vinyloxy-2,2,6,6-tetramethylpiperidine-1-oxyl) (PTVE)

As the electrolyte 36, an inorganic solid electrolyte, a polymer electrolyte, an organic electrolytic solution, and the like can be used.

As the inorganic solid electrolyte, for example, the electrolytes, which are exemplified as the electrode active material that becomes the particles 35, can be used.

As the polymer electrolyte, for example, polyethylene oxide (PEO; [CH₂-CH₂-O]ₙ), polyacrylonitrile (PAN; [CH₂(CN)-CH₂]ₙ), polyvinylidene fluoride (PVDF; [CH₂-CF₂]ₙ), poly methyl methacrylate (PMMA; [C(CH₃) (COOCH₃)-CH₂]ₙ), and the like are used.

The organic electrolytic solution is obtained by dissolving a lithium salt in an organic solvent. Examples of the lithium salt include lithium hexafluorophosphate (LiPF₆), lithium tetrafluoroborate (LiBF₄), and the like. In addition, examples of the organic solvent include ethylene carbonate (EC), propylene carbonate (PC), and the like.

Examples of a material that forms the collector electrode 33 include one metal selected from the group consisting of copper (Cu), magnesium (Mg), titanium (Ti), iron (Fe), cobalt (Co), nickel (Ni), zinc (Zn), aluminum (Al), germanium (Ge), indium (In), gold (Au), platinum (Pt), silver (Ag), and palladium (Pd), an alloy containing two or more metal elements selected from the group, and the like. In addition, stainless steel may be used, and a conductive resin material (conductive rubber and the like) can be used. As a material of the collector electrode 33 for the positive electrode body 34, aluminum is suitable.

As illustrated in Fig. 2, in the electrode body 20, when repeating charging and discharging, dendrite 24 formed from lithium may be formed on an upper surface (surface on a positive electrode body 34 side) of the negative electrode active material layer 21 in some cases.

In addition, when repeating charging and discharging, the dendrite 24 grows toward the positive electrode body 34 in the soggy sand electrolyte layer 22, but the growth of the dendrite 24 is suppressed by the soggy sand electrolyte layer 22.

The reason why the growth of the dendrite is suppressed can be assumed as follows.

The soggy sand electrolyte layer 22 has a structure in which the soggy sand particles 22a are impregnated with a liquid (an ordinary temperature molten salt, an organic electrolytic solution, and the like), and thus the liquid exists only in a space of a narrow and complicated inter-particle gap. The growth of the dendrite 24 is limited to the narrow and complicated space, and thus free growth of the dendrite 24 is blocked. According to this, the growth of the dendrite 24 is suppressed.

When reaching the inorganic solid electrolyte layer 23, additional growth of the dendrite 24 is blocked by the inorganic solid electrolyte layer 23 with high strength. According to this, it is possible to prevent short-circuiting which occurs when the dendrite 24 reaches the positive electrode body 34.

The short-circuiting between the negative electrode active material layer 21 and the positive electrode body 34 can be prevented, and thus it is possible to prevent firing and explosion which are caused due to the short-circuiting. As a result, it is possible to secure safety.

Since the safety can be raised, it is possible to use metal lithium with a high capacity density in the negative electrode, and thus it is possible to realize the high output and the high capacity of the lithium battery. In addition, it is possible to realize reduction in size and weight of the lithium battery.

In addition, the incombustible inorganic solid electrolyte or the ordinary temperature molten salt is used, and thus the lithium battery 1 with high safety is obtained.

The electrode body 20 includes the soggy sand electrolyte layer 22, and thus exhibits the following effects.

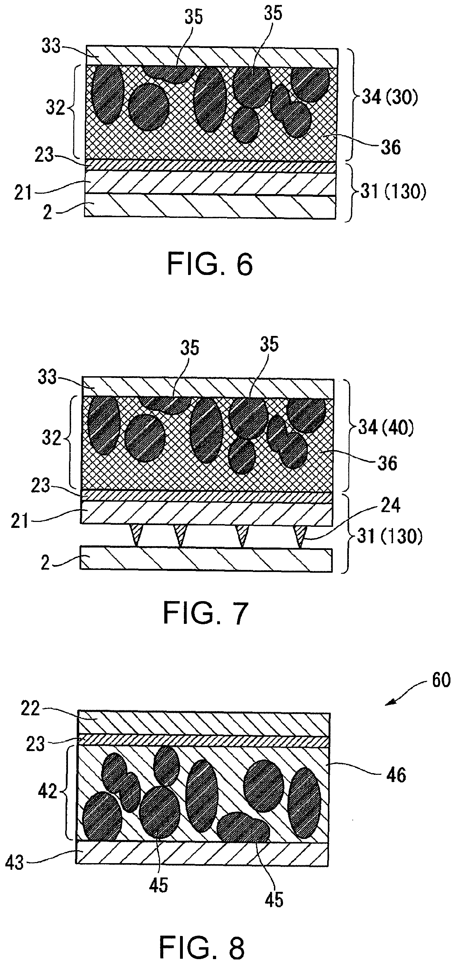

As illustrated in Figs. 6 and 7, even in a case where the soggy sand electrolyte layer 22 is not present, that is, even in an electrode body 130 in which the inorganic solid electrolyte layer 23 is formed directly on the negative electrode active material layer 21, it is possible to prevent the dendrite 24 from growing toward the positive electrode body 34.

However, as illustrated in Fig. 7, there is a possibility that the dendrite 24 grows from a surface (a lower surface in Fig. 7) on a collector electrode 2 side toward the collector electrode 2, and thus the dendrite 24 is interposed between the negative electrode active material layer 21 and the collector electrode 2, thereby decreasing a contact area between the negative electrode active material layer 21 and the collector electrode 2. When the contact area between the negative electrode active material layer 21 and the collector electrode 2 decreases, conduction efficiency between the negative electrode active material layer 21 and the collector electrode 2 deteriorates, and thus a decrease in a battery output or a faulty operation tends to occur. In addition, when the dendrite 24 is formed on a surface on a collector electrode 2 side, an amount of lithium that precipitates to the upper surface of the negative electrode active material layer 21 decreases, and thus there is a concern that a battery capacity may decreases.

In contrast, the electrode body 20 illustrated in Fig. 1 includes the soggy sand electrolyte layer 22 between the negative electrode active material layer 21 and the inorganic solid electrolyte layer 23. The soggy sand electrolyte layer 22 does not completely stop the growth of the dendrite 24, and permits growth in a space of an inter-particle gap. Accordingly, the dendrite 24 is prevented from growing toward the collector electrode 2 side, and thus it is possible to avoid the above-described decrease in the battery output, the faulty operation, the decrease in the battery capacity, and the like.

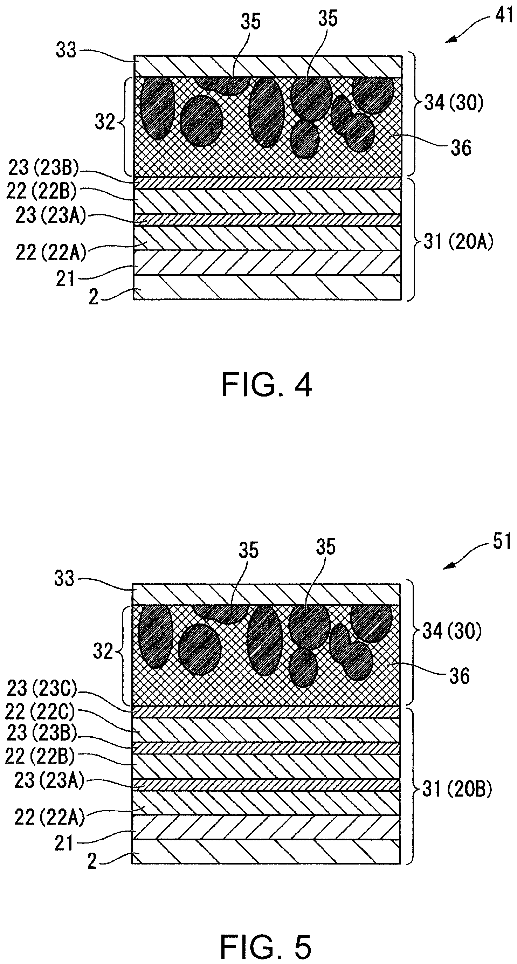

A lithium battery 41 illustrated in Fig. 4 is a second embodiment of the lithium battery according to the invention. However, in the following embodiments including this embodiment, the same reference numeral is given to a portion having the same function as in the first embodiment, and description thereof may not be repeated in some cases.

The lithium battery 41 is different from the lithium battery 1 illustrated in Fig. 1 in that an electrode body 20A is used instead of the electrode body 20.

The electrode body 20A is a second embodiment of the electrode body according to the invention, and is different from the electrode body 20 illustrated in Fig. 1 in that two laminated structures including a soggy sand electrolyte layer 22 and an inorganic solid electrolyte layer 23 are provided. That is, the electrode body 20A includes a collector electrode 2, a negative electrode active material layer 21 that is formed on the collector electrode 2, a first soggy sand electrolyte layer 22 (22A) that is formed on the negative electrode active material layer 21, a first inorganic solid electrolyte layer 23 (23A) that is formed on the first soggy sand electrolyte layer 22 (22A), a second soggy sand electrolyte layer 22 (22B) that is formed on the first inorganic solid electrolyte layer 23 (23A), and a second inorganic solid electrolyte layer 23 (23B) that is formed on the second soggy sand electrolyte layer 22 (22B).

The electrode body 20A has the two laminated structures, and thus it is possible to block the growth of the dendrite 24, thereby raising the effect of preventing short-circuiting between the positive electrode and the negative electrode.

A lithium battery 51 illustrated in Fig. 5 is a third embodiment of the lithium battery according to the invention.

The lithium battery 51 is different from the lithium battery 1 illustrated in Fig. 1 in that an electrode body 20B is used instead of the electrode body 20.

The electrode body 20B is a third embodiment of the electrode body according to the invention, and is different from the electrode body 20 illustrated in Fig. 1 in that three laminated structures including a soggy sand electrolyte layer 22 and an inorganic solid electrolyte layer 23 are provided. That is, the electrode body 20B includes a collector electrode 2, an a negative electrode active material layer 21 that is formed on the collector electrode 2, a first soggy sand electrolyte layer 22 (22A) that is formed on the negative electrode active material layer 21, a first inorganic solid electrolyte layer 23 (23A) that is formed on the first soggy sand electrolyte layer 22 (22A), a second soggy sand electrolyte layer 22 (22B) that is formed on the first inorganic solid electrolyte layer 23 (23A), a second inorganic solid electrolyte layer 23 (23B) that is formed on the second soggy sand electrolyte layer 22 (22B), a third soggy sand electrolyte layer 22 (22C) that is formed on the second inorganic solid electrolyte layer 23 (23B), and a third inorganic solid electrolyte layer 23 (23C) that is formed on the third soggy sand electrolyte layer 22 (22C).

The electrode body 20B has the three laminated structures, and thus it is possible to block the growth of the dendrite 24, thereby further raising the effect of preventing the short-circuiting between the positive electrode and the negative electrode.

In addition, the number of the laminated structures may be set to 4 or greater.

Fig. 8 is a schematic view illustrating a fourth embodiment of the electrode body according to the invention, and a reference numeral 60 represents the electrode body.

The electrode body 60 includes a collector electrode 43, an electrode mixture layer 42 that is formed on one surface of the collector electrode 43, a first inorganic solid electrolyte layer 23 that is formed on the electrode mixture layer 42, and a soggy sand electrolyte layer 22 that is formed on the first inorganic solid electrolyte layer 23.

As the collector electrode 43, it is possible to employ the same configuration as that of the collector electrode 2.

In the electrode mixture layer 42, a plurality of particles 45, which is formed from an electrode active material, are provided in an electrolyte 46. As the particles 45, an inorganic negative electrode active material is selected and used in a case where the electrode body 60 is used as a negative electrode, and an inorganic positive electrode active material is selected and used in a case where the electrode body 60 is used as a positive electrode.

As the particles 45 in the case where the electrode body 60 is used as the negative electrode, for example, the following materials can be used.
(1) A Li metal
(2) A Li-based alloy such as Li-Ag, Li-Al, Li-In, Li-Bi, Li-Sb, Li-Si, and Li-Sn
(3) An alloy of a Si-based alloy (Si-Mn, Si-Co, Si-Ni, and the like) and Li
(4) A carbon material such as graphite, hard carbon, amorphous carbon, graphene, fullerene, and carbon nanotube
(5) A lithium double oxide such as Li₄Ti₅O₁₂, Li₂Ti₃O₇, and Li₂TiO₃
(6) An oxide such as niobium pentoxide (Nb₂O₅), vanadium pentoxide (V₂O₅), titanium oxide (TiO₂) (including an anatase type, a rutile type, and a brookite type), tricobalt tetroxide (Co₃O₄), indium oxide (In₂O₃), zinc oxide (ZnO), tin oxide (SnO₂), nickel oxide (NiO), silicon oxide (SiO), silicon dioxide (SiO₂), tin (Sn)-added indium oxide (ITO), aluminum (Al)-added zinc oxide (AZO), gallium (Ga)-added zinc oxide (GZO), antimony (Sb)-added tin oxide (ATO), and fluorine (F)-added tin oxide (FTO)

As the particles 45 in the case where the electrode body 60 is used as the positive electrode, for example, the following materials can be used.
(1) A lithium double oxide such as LiCoO₂, LiNiO₂, LiMn₂O₄, Li₂Mn₂O₃, LiFePO₄, Li₂FeP₂O₇, LiMnPO₄, LiCoPO₄, LiFeBO₃, Li₃V₂(PO₄)₃, Li₂CuO₂, LiFeF₃, Li₂FeSiO₄, and Li₂MnSiO₄
(2) A solid-solution in which a part of atoms of the lithium double oxide is substituted with other transition metals, typical metals, alkali metals, alkali rare-earth elements, Lanthanides, chalcogenides, halogens, and the like.
(3) A sulfide such as Li₂S-FeS₂ and TiS₂
(4) A stable radical polymer such as poly (4-methacryloyloxy-2,2,6,6-tetramethylpiperidine-1-oxyl) (PTMA), poly(4-vinyloxy-2,2,6,6-tetramethylpiperidine-1-oxyl) (PTVE)

As the electrolyte 46, the same soggy sand electrolyte as that used in the soggy sand electrolyte layer 22 can be used. In addition, a kind of the soggy sand electrolyte, which is used as the electrolyte 46, may be different from a kind of the soggy sand electrolyte that is used in the soggy sand electrolyte layer 22.

In the electrode body 60, the soggy sand electrolyte layer 22 and the inorganic solid electrolyte layer 23 are used, and thus it is possible to reliably prevent the short-circuiting between the positive electrode and the negative electrode.

The electrode body 60 may contain a binding agent that gives plasticity or strength, or a conductive auxiliary agent that gives conductivity. As the binding agent, polytetrafluoroethylene, polyvinyl alcohol, and the like are preferable, and an addition amount thereof is preferably 1% by mass to 30% by mass.

As the conductive auxiliary agent, carbon black, acetylene black, ketjen black, and the like are preferable, and an addition amount thereof is preferably 1% by mass to 30% by mass.

For example, the electrode body 60 may be prepared by forming a collector electrode on a molded body that is prepared by subjecting a mixed powder of the particles 45 and the electrolyte 46 to compression molding, or may be prepared by adding an organic solvent such as tetrahydrofuran to the particles 45 and the electrolyte 46 to form slurry, applying the slurry onto the collector electrode, and firing the slurry which is applied on collector electrode, in a temperature range of, for example, 100°C to 200°C. The binding agent or the conductive auxiliary agent may be added to the mixed powder or the slurry.

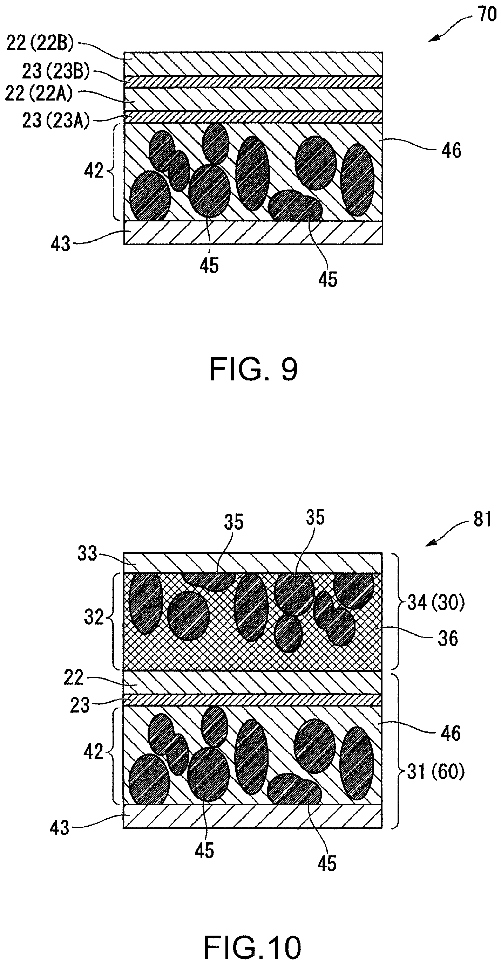

Fig. 9 is a schematic view illustrating a fifth embodiment of the electrode body according to the invention, and a reference numeral 70 represents the electrode body.

The electrode body 70 is different from the electrode body 60 illustrated in Fig. 8 in that two laminated structures including an inorganic solid electrolyte layer 23 and a soggy sand electrolyte layer 22 are provided. That is, the electrode body 70 includes a collector electrode 43, an electrode mixture layer 42 that is provided on one surface of the collector electrode 43, a first inorganic solid electrolyte layer 23 (23A) that is provided on the electrode mixture layer 42, a first soggy sand electrolyte layer 22 (22A) that is provided on the first inorganic solid electrolyte layer 23 (23A), a second inorganic solid electrolyte layer 23 (23B) that is provided on the first soggy sand electrolyte layer 22 (22A), and a second soggy sand electrolyte layer 22 (22B) that is provided on the second inorganic solid electrolyte layer 23 (23B). In addition, the number of the laminated structures may be set to 3 or greater.

The electrode body 70 has the two laminated structures, and thus it is possible to block the growth of the dendrite 24, thereby raising the effect of preventing the short-circuiting between the positive electrode and the negative electrode.

Fig. 10 is a schematic view illustrating a fourth embodiment of the lithium battery according to the invention, and in a lithium battery 81 illustrated in the drawing, the electrode body 60 illustrated in Fig. 8 is used as a negative electrode body 31, and the electrode body 30 illustrated in Fig. 1 is used as a positive electrode body 34.

In the lithium battery 81, since the electrode body 60 including the soggy sand electrolyte layer 22 and the inorganic solid electrolyte layer 23 is used, and thus it is possible to reliably prevent the short-circuiting between the positive electrode and the negative electrode.

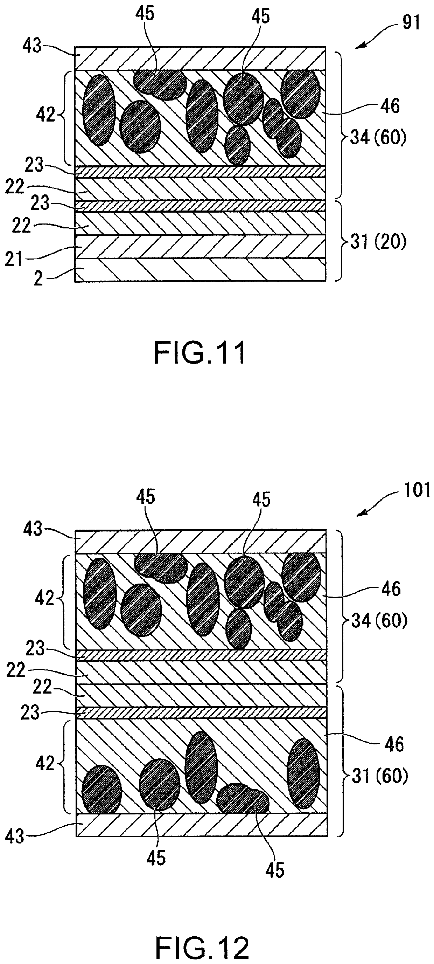

Fig. 11 is a schematic view illustrating a fifth embodiment of the lithium battery according to the invention, and in a lithium battery 91 illustrated in the drawing, the electrode body 20 illustrated in Fig. 1 is used as a negative electrode body 31, and the electrode body 60 illustrated in Fig. 8 is used as a positive electrode body 34.

In the lithium battery 91, the electrode bodies 20 and 60 which include the soggy sand electrolyte layer 22 and the inorganic solid electrolyte layer 23 are used, and thus it is possible to reliably prevent the short-circuiting between the positive electrode and the negative electrode.

Fig. 12 is a schematic view illustrating a sixth embodiment of the lithium battery according to the invention, and in a lithium battery 101 illustrated in the drawing, the electrode body 60 illustrated in Fig. 8 is used as a negative electrode body 31 and a positive electrode body 34. In the lithium battery 101, the electrode body 60 that includes the soggy sand electrolyte layer 22 and the inorganic solid electrolyte layer 23 is used, and thus it is possible to reliably prevent the short-circuiting between the positive electrode and the negative electrode.

The electrode body for a lithium battery, and the lithium battery according to the invention can be used in a portable electronic apparatus such as a portable phone, a smart phone, a wearable apparatus, and a note-book PC, an electric vehicle, and the like.

In addition, the electrode body for a lithium battery, and the lithium battery according to the invention can be used in an apparatus that is embedded in a living body such as a nerve simulator, a defibrillator, a cardiac pacemaker, a cardiac contraction module, a cardiac contraction modulator, an electrical defibrillator, a drug administration device, a cochlear implant, a hearing aid, a sensor, a telemetry device, and a diagnosis recorder in which safety is regarded as important.

The lithium battery according to the invention can be expected to be used as a single battery exceeding 20 Wh and an assembled battery exceeding 100 Wh in which safety is particularly regarded as important.

In addition, the electrode body for a lithium battery, and the lithium battery according to the invention are not limited to the embodiments, and various changes can be made in a range not departing from the gist of the invention. For example, the electrode mixture layer in the embodiments is provided on one side of the collector electrode. However, an embodiment, in which the electrode mixture layer is provided on both sides of the collector electrode and the solid electrolyte is disposed to surround the electrode mixture layer, is also included in an application range of the invention.

## Claims

1. An electrode body for a lithium battery, comprising:
a collector electrode;
an electrode mixture layer, one side of which is in contact with the collector electrode;
an inorganic solid electrolyte layer is in contact with the opposite side of the electrode mixture layer relative to the collector electrode; and
a soggy sand electrolyte layer is in contact with the opposite side of the inorganic solid electrolyte layer relative to the electrode mixture layer,
wherein
the electrode mixture layer is constituted by a mixture of an electrode active material and a solid electrolyte, in the soggy sand electrolyte layer, a plurality of particles is impregnated with an ordinary temperature molten salt electrolyte, and
the ordinary temperature molten salt electrolyte is an ionic liquid which is a liquid in a temperature range of 0°C to 200°C.

2. The electrode body for a lithium battery according to claim 1,
wherein two or more laminated structures are provided, each of the laminated structures including the soggy sand electrolyte layer and the inorganic solid electrolyte layer.

3. The electrode body for a lithium battery according to claim 1 or claim 2,
wherein the inorganic solid electrolyte layer is formed by a vapor phase method.

4. The electrode body for a lithium battery according to any of claims 1 to 3,
wherein the electrode active material of the electrode mixture layer is a negative active material.

5. The electrode body for a lithium battery according to any of claims 1 to 3,
wherein the electrode active material of the electrode mixture layer is a positive active material.

6. A lithium battery, comprising:
the electrode body for a lithium battery according to claim 4 as a negative electrode.

7. A lithium battery, comprising:
the electrode body for a lithium battery according to claim 5 as a positive electrode.

## Patentansprüche

1. Elektrodenkörper für eine Lithiumbatterie, umfassend:
eine Kollektorelektrode;
eine Elektrodenmischungsschicht, bei der eine Seite hiervon in Kontakt mit der Kollektorelektrode steht;
eine anorganische Festelektrolytschicht, die in Kontakt mit der gegenüberliegenden Seite der Elektrodenmischungsschicht, relativ zu der Kollektorelektrode, steht; und
eine feuchte Sandelektrolytschicht, die in Kontakt mit der gegenüberliegenden Seite der anorganischen Festelektrolytschicht, relativ zu der Elektrodenmischungsschicht, steht,
worin
die Elektrodenmischungsschicht durch eine Mischung eines aktiven Elektrodenmaterials und eines Festelektrolyten aufgebaut ist,
in der feuchten Sandelektrolytschicht eine Vielzahl von Partikeln mit einem bei herkömmlicher Temperatur geschmolzenem Salzelektrolyten imprägniert ist, und
der bei herkömmlicher Temperatur geschmolzene Salzelektrolyt eine ionische Flüssigkeit ist, die im Temperaturbereich von 0°C bis 200°C flüssig ist.

2. Elektrodenkörper für eine Lithiumbatterie gemäß Anspruch 1,
worin zwei oder mehr laminierte Strukturen vorgesehen sind, wobei jede der laminierten Strukturen die feuchte Sandelektrolytschicht und die anorganische Festelektrolytschicht umfasst.

3. Elektrodenkörper für eine Lithiumbatterie gemäß Anspruch 1 oder Anspruch 2,
worin die anorganische Festelektrolytschicht durch ein Gasphasenverfahren gebildet ist.

4. Elektrodenkörper für eine Lithiumbatterie gemäß irgendeinem der Ansprüche 1 bis 3,
worin das aktive Elektrodenmaterial der Elektrodenmischungsschicht ein aktives Negativmaterial ist.

5. Elektrodenkörper für eine Lithiumbatterie gemäß irgendeinem der Ansprüche 1 bis 3,
worin das aktive Elektrodenmaterial der Elektrodenmischungsschicht ein aktives Positivmaterial ist.

6. Lithiumbatterie, umfassend:
den Elektrodenkörper für eine Lithiumbatterie gemäß Anspruch 4, als eine negative Elektrode.

7. Lithiumbatterie, umfassend:
den Elektrodenkörper für eine Lithiumbatterie gemäß Anspruch 5, als eine positive Elektrode.

## Revendications

1. Corps d'électrode pour une batterie au lithium, comprenant :
- une électrode collectrice ;
- une couche de mélange d'électrode, dont un côté est en contact avec l'électrode collectrice ;
- une couche d'électrolyte solide inorganique est en contact avec le côté opposé de la couche de mélange d'électrode par rapport à l'électrode collectrice ; et
- une couche d'électrolyte de sable détrempé est en contact du côté opposé de la couche d'électrolyte solide inorganique par rapport à la couche de mélange d'électrode,
dans lequel
- la couche de mélange d'électrode est constituée d'un mélange d'une matière active d'électrode et d'un électrolyte solide,
- dans la couche d'électrolyte de sable détrempé, une pluralité de particules est imprégnée d'un électrolyte de sel fondu à température ordinaire, et
- l'électrolyte de sel fondu à température ordinaire est un liquide ionique qui est un liquide dans une plage de températures de 0°C à 200°C.

2. Corps d'électrode pour une batterie au lithium selon la revendication 1,
dans lequel deux structures stratifiées ou plus sont prévues, chacune des structures stratifiées comprenant la couche d'électrolyte de sable détrempé et la couche d'électrolyte solide inorganique.

3. Corps d'électrode pour une batterie au lithium selon la revendication 1 ou la revendication 2, dans lequel
la couche d'électrolyte solide inorganique est formée par un procédé en phase vapeur.

4. Corps d'électrode pour une batterie au lithium selon l'une quelconque des revendications 1 à 3,
dans lequel le matériau actif d'électrode de la couche de mélange d'électrode est un matériau actif négatif.

5. Corps d'électrode pour une batterie au lithium selon l'une quelconque des revendications 1 à 3,
dans lequel le matériau actif d'électrode de la couche de mélange d'électrode est un matériau actif positif.

6. Batterie au lithium comprenant :
le corps d'électrode pour une batterie au lithium selon la revendication 4 en tant qu'électrode négative.

7. Batterie au lithium comprenant :
le corps d'électrode pour une batterie au lithium selon la revendication 5 en tant qu'électrode positive.
